# EUROPEAN PATENT SPECIFICATION

(11) **EP 1 728 317 B1**
(45) Date of publication and mention of the grant of the patent: **20.09.2017**
(21) Application number: 04806639.3
(22) Date of filing: 30.12.2004
(51) Int. Cl.: H02P 27/04, F25B 49/02

(54) **A COOLING DEVICE**
KÜHLVORRICHTUNG
DISPOSITIF DE REFROIDISSEMENT

(30) Priority: 31.12.2003 TR 200302364
(43) Date of publication of application: 06.12.2006
(73) Proprietor: Arçelik Anonim Sirketi, 34950 Istanbul (TR)
(72) Inventor: TEZDUYAR, Latif, Arcelik Anonim Sirketi, 34950 Istanbul (TR); SONMEZOZ, Fethi, Arcelik Anonim Sirketi, 34950 Istanbul (TR); ERENAY, Kerem, Arcelik Anonim Sirketi, 34950 Istanbul (TR)
(74) Representative: Louis Pöhlau Lohrentz
(86) International application number: PCT/IB2004/052938
(87) International publication number: WO 2005/067135

(56) References cited:
- DE-A1- 3 740 767
- US-A- 4 566 289
- US-A- 4 718 247
- US-A- 6 134 901
- PATENT ABSTRACTS OF JAPAN vol. 010, no. 333 (M-534), 12 November 1986 (1986-11-12) & JP 61 138043 A (HITACHI LTD), 25 June 1986 (1986-06-25)
- PATENT ABSTRACTS OF JAPAN vol. 009, no. 295 (E-360), 21 November 1985 (1985-11-21) & JP 60 134797 A (SHISUTEMU HOOMUZU:KK), 18 July 1985 (1985-07-18)

## Description

The present invention relates to a cooling device whereof compressor motor that enables the refrigeration cycle can be driven at variable speed.

In the current state of the art, in cooling devices, preferably in refrigerators, the freezing capacity is determined by the capacity of the compressor that realizes the refrigeration cycle. The compressors operating at high capacities provide better freezing at certain conditions; however, the energy consumption is considerably high when they are in operation at a constant capacity. As a result, the compressors with variable capacity or variable speed are preferred in order to obtain the highest efficiency. However, the compressors with variable speed require units such as a driving unit or an inverter to control themselves and their speed. Thus, in addition to the increasing cost of production, a number of factors affecting the efficiency emerge; hence, the total efficiency is decreased.

In the current state of the method, as described in US Patent Application 4566289, a description is given of a cooling device with an increased freezing efficiency having the ability to operate at several modes and being driven by the commercial power supply when separated from the inverter.

The US Patent 4,718,247 discloses a cooling device according to the preamble of claim 1.

The object of the present invention is to realize a cooling device whereof the refrigeration cycle is provided by a compressor that is driven, when necessary, by the network power supply at variable speeds.

This object is realized by the characterizing part of claim 1. Further embodiments are indicated in the dependent claims.

A cooling device designed to fulfill these objects is illustrated in the accompanying drawings, where:
Fig. 1 is a schematic diagram of the cooling device.
Fig. 2 is a schematic view of the motor control unit, which comprises a thermostat that drives the motor directly.
Fig. 3 is a schematic view of the motor control unit, which comprises a inverter with an intelligent control unit and a thermostat that drives the motor directly.
Fig. 4 is a schematic view of the motor control unit, which drives a three-phase star connected motor with single-phase voltage supply directly via a thermostat with "Steinmetz connection" or via an inverter.
Fig. 5 is a schematic view of the motor control unit, which drives a three-phase delta connected motor with single-phase voltage supply directly via a thermostat with "Steinmetz connection" or via an inverter.
Fig. 6 is a schematic view of the inverter circuit that incorporates an intelligent control unit and a thermostat that drives a single-phase motor with single-phase voltage supply.
Fig. 7 is a schematic view of the inverter circuit that incorporates an intelligent control unit and a thermostat that drives a three-phase motor with three-phase voltage supply.

Parts shown on the figures are numbered as follows:
1. Cooling device
2. Motor
3. Inverter circuit
4. Motor control unit
5. Switching unit
6. Thermostat
21. Power switch
22. Inverter control unit
23. Driver
24. Converter
31. Thermostat control unit

Cooling devices (1) comprise a motor (2) enables the circulation of the refrigerating fluid and fed by a power supply (A) such as network voltage and a motor control unit (4) responsible for the control of the motor (2).

The motor control unit (4) comprises an inverter circuit (3) that allows voltage from the power supply (A) to operate the motor (2) at the desired frequency, a switching unit (5) that transmits the voltage from the power supply (A) to the motor (2), and a thermostat (6) which, depending on the perceived temperature level, triggers the switching unit (5) and/or the inverter circuit (3) and hence enables the motor (2) to be driven first by the network voltage and then by the inverter circuit (3).

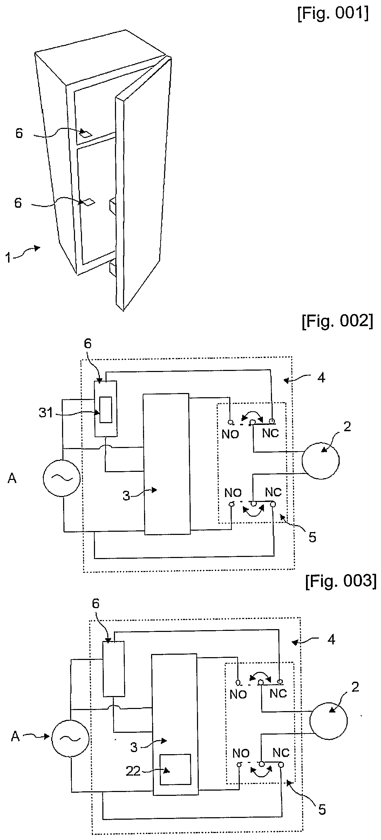

In a particular application of the invention, the thermostat (6), which is placed inside the cooling device (1), acts like a switch in the motor control unit (4) by sensing the temperature; thus drives the motor (2) initially by the network voltage and simultaneously produces a signal to switch the control to the inverter circuit (3). The inverter circuit (3) employed in this application comprises at least one control unit (22) with the attributes of intelligent control unit, with a software for control and with the hardware such as a microprocessor and/or a memory; a converter (24) obtain usable data from the temperature data collected e. g. A/D (Analog digital converter), I/O (Input/Output), SPI (Serial Periferal Interface), and a driver (23) e. g. MosGate Driver that enables the control of the switches (Figure 3).

Another application of the invention employs at least one thermostat control unit (31) having the ability of perceiving temperature at one or more points, equipped with a software that performs the control of the thermostat control unit (31) itself and the points whereto it is attached and containing the hardware such as at least one microprocessor and/or a memory. In this application, placed inside the cooling device (1) is an electronic thermostat (6) which acts like a switch in the motor control unit (4) by sensing one or more temperature values ; thus drives the motor (2) initially by the network voltage and controls the entire working pattern of the motor (2) by triggering both the inverter circuit (3) and the switching unit (5) at the right time. By so doing, regardless of the fact that the cooling device (1) has a control unit or not, the electronic thermostat (6) performs the control of the motor (2) by the values it measures and thus, realizes the control of the refrigeration cycle of the cooling device (figure 2).

According to the invention, the thermostat (6) is further configured; when a lower temperature level (Tlow) is perceived inside the cooling device (1), the thermostat (6); transmits this temperature level (Tlow) to the inverter circuit (3) by producing a signal, disconnects the motor (2) since the operation of the motor is not needed at this temperature level (Tlow), stimulates the switching unit (5) to switch the motor (2) to a position where it is driven by the network voltage via the thermostat (6) itself and; when an upper temperature level (Tup) is perceived inside the cooling device (1), the thermostat (6), transmits this temperature level (Tup) to the inverter circuit (3) by producing a signal, if the motor (2) is not already in operation at this temperature level (Tup), starts the motor (2) to be driven initially by the network voltage and hence starts the refrigeration process inside the cooling device (1), triggers the inverter circuit (3) to drive the motor (2) at higher speeds to obtain more freezing and; when a temperature level between the lower temperature level (Tlow) and the upper temperature level (Tup) is perceived inside the cooling device (1), the thermostat (6), transmits this temperature level to the inverter circuit (3) by producing a signal, does not intervene in the inverter circuit (3) or in the switching circuit (5) until the temperature level reaches the lower temperature level (Tlow) or the upper temperature level (Tup).

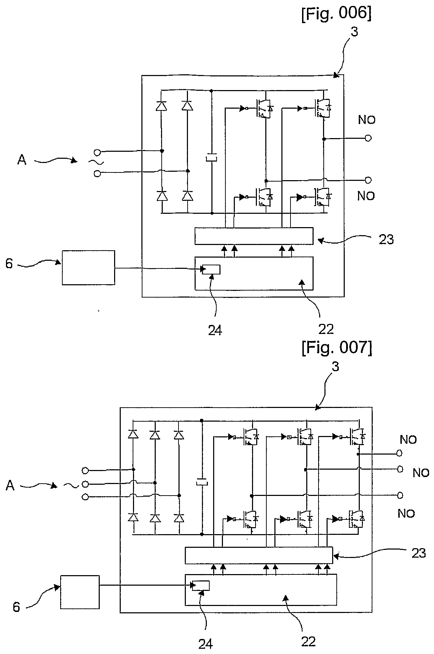

In the particular application of the invention where the inverter circuit (3) and/or the switching unit (5) is stimulated by the thermostat (6), the inverter circuit (3) for a single-phase motor (2) includes four diodes, a capacitor and four transistors in single-phase bridge inverter construction (Figure 6), or in an industrial application, on the other hand, the inverter circuit (3) contains three-phase bridge construction, four of six diodes, preferably one or more capacitors and six transistors (Figure 7).

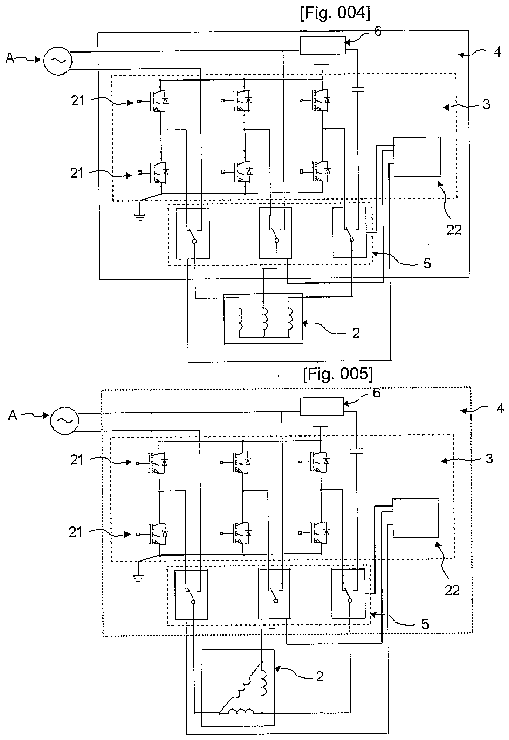

In another application of the invention, the cooling device (1) with a three-phase motor (2) is supplied from a non 3-phase source through "Steinmetz Connection". In this application, the inverter circuit (3) contains more than one, preferably six, power switches (21). The controls of the power switches (21) are realized by the control unit (22). By so doing, the efficient control of the three-phase star connected motor (2) (Figure 4) or the three-phase delta connected motor (2) (Figure 5) both of which are supplied from a single-phase source is achieved.

Especially when it is needed to increase the freezing, the motor (2) should be driven at other frequency values. The inverter circuit (3) enables the motors (2) that are not of VCC type (variable capacity compressor), especially single-phase motors, to operate at variable conditions. However, when the motor (2) is driven by the inverter circuit (3) all the time, some troubles are encountered ; for instance, as the motor (2) starts to operate the initial current goes up to a level where it may damage the inverter circuit (3). That's why the switching unit (5) is introduced to transmit the voltage from the power supply (A) to the motor (2) either directly from the power supply (A) or via the inverter circuit (3).

With the application according to the present invention, freezing is provided with the lowest energy consumption when the ambient temperature is not in between 32. 5 C and 40. 1 C which is assumed to be abnormal conditions and when the cooling devices (1) are chosen with optimal capacities and with compressors of which the capacities are below the required level.

In the application according to the present invention, owing to the values it measures, the thermostat (6) drives the motor (2) either directly by the network voltage from the power source (A) or by the inverter circuit (3). Thus, owing to the thermostat (6) placed inside the cooling device (1), the operation of motor (2) at variable speed is achieved in an economic manner without using an additional refrigerator control card or such additional devices. In the application according to the present invention, since during the startup the motor is supplied via the power supply (A), the inverter circuit can be produced with less parts and hence with a lower cost.

## Claims

1. A cooling device (1) that incorporates a motor (2) accountable for the refrigeration cycle and fed from a power supply (A), for instance the network voltage, comprising a motor control unit (4) that comprises an inverter circuit (3), which is configured to provide the control of the motor (2) and to adjust the frequency of the motor (2) to the desired frequency, a switching unit (5), which is configured to transmit the voltage from the power supply (A) to the motor (2), and a thermostat (6), which depending on the perceived temperature level, is configured to trigger the switching unit (5) and/or the inverter circuit (3) and hence to enable the motor (2) to be driven first by the network voltage and then by the inverter circuit (3), **characterized in that** the thermostat (6) is further is configured; when a lower temperature level (Tlow) is perceived inside the cooling device (1), to transmit this temperature level (Tlow) to the inverter circuit (3) by producing a signal, to disconnect the motor (2), to stimulate the switching unit (5) to switch the motor (2) to a position where it is driven by the network voltage via the thermostat (6) itself and; when an upper temperature level (Tup) is perceived inside the cooling device (1), to transmit this temperature level (Tup) to the inverter circuit (3) by producing a signal, if the motor (2) is not already in operation at this temperature level (Tup), to start the motor (2) to be driven initially by the network voltage and hence to start the refrigeration process inside the cooling device (1), to trigger the inverter circuit (3) to drive the motor (2) at higher speeds to obtain more freezing and; when a temperature level between the lower temperature level (Tlow) and the upper temperature level (Tup) is perceived inside the cooling device (1), to transmit this temperature level to the inverter circuit (3) by producing a signal, not to intervene in the inverter circuit (3) or in the switching circuit (5) until the temperature level reaches the lower temperature level (Tlow) or the upper temperature level (Tup).

2. A cooling device (1) as described in Claim 1, **characterized by** a motor control circuit (7) that attributes of intelligent control unit and, comprises an inverter circuit (3) which has at least one control unit (22) with a software for control and with the hardware such as a microprocessor and/or a memory; a converter (24) which enables usable data from the temperature data measured, e. g. A/D (Analog digital converter), I/O (Input/Output), SPI (Serial Peripheral Interface) and a driver (23) that enables the control of the switches.

3. A cooling device (1) as described in Claim 1, **characterized by** a motor control unit (4) that comprises an electronic thermostat (6) which acts like a switch in the motor control unit (4), thus starts up the motor (2) by the network voltage by owing to the one or more temperature values it measures, and controls the entire working pattern of the motor (2) by triggering both the inverter circuit (3) and the switching unit (5) at the right time, performs the control of the motor (2) by the values it measures and thus; realizes the control of the refrigeration cycle of the cooling device.

4. A cooling device (1) as described in Claim 1, **characterized in that** the motor (2) is a three-phase motor and the power source (A) is a single-phase power source, wherein the three-phase motor is supplied from the single-phase power source through "Steinmetz Connection" or by the inverter circuit (3).

5. A cooling device (1) as described in Claim 2, **characterized by** a motor control unit (4) that comprises an inverter circuit (3) which includes a control unit (22) having a number of power switches (21), a software for the control of the power switches (21) and a memory.

## Patentansprüche

1. Ein Kühlgerät (1), das einen Motor (2) einbaut, verantwortlich für den Kältekreislauf und versorgt von einer Stromquelle (A), zum Beispiel Spannungsnetz, bestehend aus einer Motorkontrolleinheit (4), die eine Umkehrschaltung (3) besitzt, die konfiguriert ist, die Kontrolle des Motors (2) sicherzustellen und die Frequenz des Motors (2) zur beabsichtigten Frequenz einzustellen, einer Schalteinheit (5), die konfiguriert ist, die Spannung von Stromquelle (A) zum Motor (2) zu übertragen, und einem Thermostat (6), der in Abhängigkeit vom wahrgenommenen Temperaturniveau konfiguriert ist, die Schalteinheit (5) und/oder Umkehrschaltung (3) abzudrücken und daher ermöglichen, den Motor (2) zuerst mit Spannungsnetz und dann mit Umkehrschaltung (3) zu betätigen, **dadurch gekennzeichnet, daß** der Thermostat (6) weiter konfiguriert ist; wenn ein niedriges Temperaturniveau (Tlow) im Innern des Kühlgeräts (1) wahrgenommen ist, für Übertragung dieses Temperaturniveaus (Tlow) zur Umkehrschaltung (3) durch Erzeugung eines Signals, für Trennung des Motors (2), für Anregung der Schalteinheit (5), für Schaltung des Motors (2) zu einer Position, wo er mit Spannungsnetz durch den Thermostat (6) selbst betätigt wird und; wenn ein höheres Temperaturniveau (Tup) im Innern des Kühlgeräts (1) wahrgenommen ist, für Übertragung dieses Temperaturniveaus (Tup) zur Umkehrschaltung (3) durch Erzeugung eines Signals, wenn der Motor (2) noch nicht tätig ist in diesem Temperaturniveau (Tup), für Starten des Motors (2), zuerst mit Spannungsnetz zu betätigen und daher für Starten des Abkühlungsprozesses im Innern des Kühlgeräts (1), für den Abdruck der Umkehrschaltung (3), für Betätigung des Motors (2) in höheren Geschwindigkeiten, um mehr Erstarrung zu erhalten und; wenn ein Temperaturniveau zwischen niedrigem Temperaturniveau (Tlow) und höherem Temperaturniveau (Tup) im Innern des Kühlgeräts (1) wahrgenommen ist, für Übertragung dieses Temperaturniveaus zur Umkehrschaltung (3) durch Erzeugung eines Signals, für Nichteingriff in Umkehrschaltung (3) oder in Schalteinheit (5) bis Temperaturniveau das niedrige Temperaturniveau (Tlow) oder das höhere Temperaturniveau (Tup) erreicht.

2. Ein Kühlgerät (1) wie in Anspruch 1, **dadurch gekennzeichnet, daß** eine Motorkontrolleinheit (7), die die Intelligenzkontrolleinheit zuschreibt und, besteht aus einer Umkehrschaltung (3), die mindestens eine Kontrolleinheit (22) besitzt mit einem Software für Kontrolle und mit Hardware wie ein Mikroprozessor und/oder ein Gedächtnis; einen Konverter (24), der ermöglicht, anwendbare Data vom Data der Temperatur zu bemessen, z. B. A/D (Analog-Digital Konverter), I/O (Input/Output), SPI (Serielle Peripherische Interface) und einen Treiber (23), der ermöglicht die Kontrolle der Schaltungen.

3. Ein Kühlgerät (1) wie in Anspruch 1, **dadurch gekennzeichnet, daß** eine Motorkontrolleeinheit (4), die aus einem elektronischen Thermostat (6) besteht, der wie eine Schaltung in Motorkontrolleeinheit (4) bewirkt, daher den Motor (2) einschaltet durch Spannungsnetz mit Besitz von einer oder mehreren Temperaturwerten, die er bemesst, und kontrolliert das gesamte Arbeitsmuster des Motors (2) durch Abdruck sowohl die Umkehrschaltung (3) und die Schalteinheit (5) in rechter Zeit, erfüllt die Kontrolle des Motors (2) durch Werte, die er bemesst und daher; realisiert die Kontrolle des Kältekreislaufs des Kühlgeräts.

4. Ein Kühlgerät (1) wie in Anspruch 1, **dadurch gekennzeichnet, daß** der Motor (2) ein dreiphasiger Motor und die Stromquelle (A) eine einphasige Stromquelle ist, wobei dreiphasiger Motor versorgt ist von einphasiger Stromquelle durch "Steinmetz Verbindung" oder durch Umkehrschaltung (3).

5. Ein Kühlgerät (1) wie in Anspruch 2, **dadurch gekennzeichnet, daß** eine Motorkontroleinheit (4) besteht aus einer Umkehrschaltung (3), die eine Kontroleinheit (22) beinhaltet, die eine Reihe von Stromschaltungen (21), ein Software für die Kontrolle der Stromschaltungen (21) und ein Gedächtnis besitzt.

## Revendications

1. Un dispositif de refroidissement (1) qui comprend un moteur (2) responsable du cycle de réfrigération et alimenté à partir d'une alimentation électrique (A), par exemple la tension de réseau, comprenant une unité de commande de moteur (4) qui comprend un circuit inverseur (3), qui est configuré pour assurer la commande du moteur (2) et pour régler la fréquence du moteur (2) à la fréquence désirée, une unité de commutation (5) qui est configurée pour transmettre la tension de l'alimentation électrique (A) au moteur (2), et un thermostat (6) qui, en fonction du niveau de température perçu, est configuré pour déclencher l'unité de commutation (5) et/ou le circuit inverseur (3) et donc permettre au moteur (2) pour être entraîné d'abord par la tension réseau et puis par le circuit inverseur (3), **caractérisé en ce que** le thermostat (6) est en outre configuré; lorsqu'un niveau de température inférieur (Tlow) est perçu à l'intérieur du dispositif de refroidissement (1), pour transmettre ce niveau de température (Tlow) au circuit inverseur (3) en produisant un signal, pour déconnecter le moteur (2), pour stimuler l'unité de commutation (5) pour commuter le moteur (2) à une position où il est entraîné par la tension du réseau via le thermostat (6) lui-même et; lorsqu'un niveau de température supérieur (Tup) est perçu à l'intérieur du dispositif de refroidissement (1), pour transmettre ce niveau de température (Tup) au circuit inverseur (3) en produisant un signal si le moteur (2) n'est pas déjà opérationnel à ce niveau de température (Tup), pour démarrer le moteur (2) pour être entraîné initialement par la tension du réseau et donc pour démarrer le processus de réfrigération à l'intérieur du dispositif de refroidissement (1), pour déclencher le circuit inverseur (3) pour entraîner le moteur (2) à des vitesses plus élevées pour obtenir plus de congélation et; lorsque le niveau de température entre le niveau de température inférieur (Tlow) et le niveau de température supérieur (Tup) est perçu à l'intérieur du dispositif de refroidissement (1), pour transmettre ce niveau de température au circuit inverseur (3) en produisant un signal pour ne pas intervenir dans le circuit inverseur (3) ou dans le circuit de commutation (5) jusqu'à ce que le niveau de température atteigne le niveau de température inférieur (Tlow) ou le niveau de température supérieur (Tup).

2. Un dispositif de refroidissement (1) selon la revendication 1, **caractérisé par** un circuit de commande de moteur (7) qui attribue une unité de commande intelligente et comprend un circuit inverseur (3) qui comporte au moins une unité de commande (22) avec un logiciel pour contrôler et avec le matériel tel qu'un microprocesseur et/ou une mémoire; un convertisseur (24) qui permet des données utilisables à partir des données de température mesurées, e. g. A/D (convertisseur analogique - numérique), E/S (Entrée/Sortie), SPI (Interface périphérique série) et un pilote (23) qui permet de contrôler les commutateurs.

3. Un dispositif de refroidissement (1) selon la revendication 1, **caractérisé par** une unité de commande de moteur (4) qui comprend un thermostat électronique (6) qui agit comme un commutateur dans l'unité de commande du moteur (4), démarre ainsi le moteur (2) par la tension du réseau en raison d'une ou plusieurs valeurs de température qu'il mesure, et contrôle l'ensemble du mode de fonctionnement du moteur (2) en déclenchant à la fois le circuit inverseur (3) et l'unité de commutation (5) au bon moment, effectue le contrôle du moteur (2) par les valeurs qu'il mesure et donc; réalise le contrôle du cycle de réfrigération du dispositif de refroidissement.

4. Un dispositif de refroidissement (1) selon la revendication 1, **caractérisé en ce que** le moteur (2) est un moteur triphasé et la source d'alimentation (A) est une source d'alimentation monophasée, dans laquelle le moteur triphasé est alimenté par la source d'alimentation monophasée à travers "Steinmetz Connection" ou par le circuit inverseur (3).

5. Un dispositif de refroidissement (1) selon la revendication 2, **caractérisé par** une unité de commande de moteur (4) qui comprend un circuit inverseur (3) qui comprend une unité de commande (22) comportant un certain nombre de commutateurs d'alimentation (21), un logiciel pour le contrôle des interrupteurs d'alimentation (21) et une mémoire.
